# FASCICULE DE BREVET EUROPEEN

(11) **EP 1 900 497 B1**
(45) Date de publication et mention de la délivrance du brevet: **31.03.2010**
(21) Numéro de dépôt: 07114142.8
(22) Date de dépôt: 10.08.2007
(51) Int. Cl.: B29C 47/48, B29C 47/68, B29C 47/50

(54) **Procédé et dispositif d'homogénéisation et de filtration d'un materiaux viscoélastique**
Verfahren und Vorrichtung zum Homogenisieren und Filtrieren eines viskoelastischen Materials
Method and device for homogenising and filtering a viscoelastic material

(30) Priorité: 14.09.2006 FR 0608124
(43) Date de publication de la demande: 19.03.2008
(73) Titulaire: Société de Technologie Michelin, 63000 Clermont-Ferrand (FR); Michelin Recherche et Technique S.A., 1763 Granges-Paccot (CH)
(72) Inventeur: Nicolas, Serge, 63100 Clermont-Ferrand (FR); Crosnier, Gérard, 63122 Ceyrat (FR); Dussardier, Bruno, 63720 Ennezat (FR)
(74) Mandataire: Le Cam, Stéphane Georges Elie

(56) Documents cités:
- WO-A-2005/087477
- DE-A1- 2 306 665
- SU-A1- 1 498 623
- US-A- 2 948 922

## Description

L'invention concerne le domaine de l'extrusion des matériaux plastiques ou viscoélastiques, et en particulier le domaine de l'extrusion de matériaux caoutchoutiques.

La mise en oeuvre industrielle de ces matériaux, avant de réaliser leur mise en forme par injection ou par passage dans une filière, exige de procéder à une homogénéisation en température et en viscosité la plus complète possible de manière à maîtriser les caractéristiques mécaniques du produit fini.

Les procédés d'extrusion classiques permettant d'assurer ces fonctionnalités comprennent une vis dont la forme des filets est adaptée pour faire circuler le matériau, tout en fragmentant et en recombinant les flux. Ils peuvent comprendre une grille de filtration disposée en aval du flux, de manière à éliminer les matières étrangères indésirables.

Ces procédés sont en général très pénalisant sur les performances en débit et en température des moyens d'extrusion, en raison des pertes de charge élevées qu'ils entraînent. Cette pénalisation est encore augmentée si on ajoute un système de filtration. L'accumulation des matières peut en effet occasionner l'obturation des filtres, ce qui contribue à alourdir l'exploitation.

Il est connu de l'art antérieur un dispositif d'extrusion comportant deux ou plusieurs vis de malaxage et de transport disposées coaxialement et de manière concentrique les unes par rapport aux autres dans un même corps, dans lequel les fonds de filet d'une vis de diamètre supérieur comportent des orifices permettant de faire communiquer l'espace balayé par les filets de la vis de diamètre supérieur avec l'espace balayé par les filets de la vis de diamètre immédiatement inférieur. Ce type de dispositif est décrit à titre d'exemple dans le brevet FR 1 270 314 ou bien encore dans le brevet FR 2 008 656.

De tels dispositifs permettent d'obtenir un certain niveau d'homogénéisation, mais sont limités dans cette action dans la mesure où le matériau passe directement de l'espace balayé par les filets de la vis de plus grand diamètre dans l'espace balayé par les filets de la vis de diamètre immédiatement inférieur. En outre, en raison de ce type de montage, les vis doivent tourner à des vitesses différentes les unes par rapport aux autres de manière à fournir le travail nécessaire au transfert du matériau. Ceci conduit à des montages mécaniques complexes, en particulier lorsque l'on souhaite réaliser un dispositif comportant plus de deux vis concentriques.

Il est également connu des publications US 2 948 922 ou SU 1 498 623, un dispositif et un procédé dans lequel on interpose un tube cylindrique fixe comprenant des évidements traversant la paroi dudit tube cylindrique entre l'espace balayé par les filets d'une vis de diamètre inférieur et l'espace dans lequel débouchent des orifices pratiqués dans les fonds de filet d'une vis de diamètre supérieur. Les deux vis étant elles même disposées coaxialement de manière concentrique l'une par rapport à l'autre dans un corps. Toutefois, ces dispositifs présentent l'inconvénient de ne pas permettre d'évacuer facilement les matières dont la taille est supérieure à la taille des orifices pratiqués dans le tube cylindrique sans qu'il soit nécessaire d'immobiliser le dispositif pour réaliser une opération de vidage et de décolmatage du filtre.

Le dispositif selon l'invention, destiné à l'extrusion et à la filtration d'un matériau viscoélastique, a pour objet de remédier à cet inconvénient. Ce dispositif comporte deux ou plusieurs vis de malaxage et de transport disposées coaxialement et de manière concentriques dans un corps dans lequel les fonds de filet d'une vis de diamètre supérieur comportent des orifices permettant de faire communiquer l'espace balayé par les filets de ladite vis de diamètre supérieur avec l'espace balayé par les filets de la vis de diamètre immédiatement inférieur.

Un tube cylindrique fixe, comprenant des évidements traversant la paroi dudit tube cylindrique est interposé entre l'espace balayé par les filets de la vis de diamètre inférieur et l'espace dans lequel débouchent les orifices. L'espace balayé par les filets de la vis de plus grand diamètre est fermé par une paroi de sorte que, lorsque le dispositif est en fonctionnement, le matériau est forcé à passer dans les orifices puis dans les évidements. La paroi comporte un orifice communiquant avec un exutoire fermé par un moyen d'obturation amovible.

Le tube cylindrique joue le rôle d'une plaque de filtre dont il convient d'ajuster la taille des évidements de manière à calibrer la taille des particules de matériau que l'on désire filtrer.

Cette disposition permet de concentrer les matières dont le diamètre est supérieur à la taille des orifices à l'extrémité de l'espace balayé par les filets de la vis de plus grand diamètre et communiquant avec l'exutoire. Il suffit alors d'ouvrir l'exutoire pour provoquer le vidage de ladite zone d'extrémité et entraîner vers l'extérieur les particules indésirables sans qu'il soit nécessaire d'interrompre le fonctionnement de la machine.

Cette disposition permet également d'améliorer l'homogénéisation du matériau. En effet, le flux est divisé une première fois en passant au travers des orifices, puis une deuxième fois en passant dans les évidements pratiqués dans le tube cylindrique, avant d'être entraîné par les filets de la vis de diamètre inférieur.

De plus, le matériau subit un cisaillement important lors du passage entre les différentes pièces du fait des mouvements relatifs de ces pièces les unes par rapport aux autres.

On observe en outre que cette capacité d'homogénéisation, de travail mécanique et de filtration s'obtient avec une perte de charge relativement limitée en raison de la faible valeur des distances dites passives, sur lesquelles le déplacement du matériau est assuré par la seule pression régnant en amont. Cette distance passive est formée, au premier ordre, par la longueur des orifices traversant les fonds de filets de la vis de diamètre supérieur et par l'épaisseur du tube cylindrique. Cette faible valeur de la perte de charge a pour effet de limiter l'augmentation de la température du matériau.

Enfin, compte tenu du fait que le tube cylindrique n'est pas entraîné en rotation, ledit tube cylindrique joue le rôle de la paroi interne du corps d'une extrudeuse. Il est alors possible de faire tourner les vis à la même vitesse de rotation, ce qui autorise de rendre ces pièces solidaires, et de les entraîner à l'aide d'un organe mécanique commun. Le montage et la réalisation d'un tel système en sont donc grandement simplifiés, en regard du montage et de la réalisation des systèmes connus.

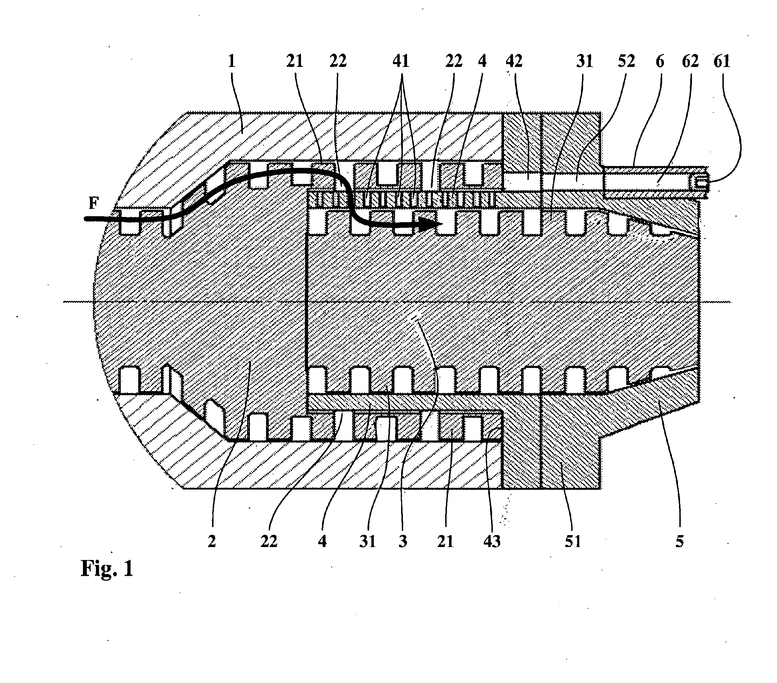

La description qui suit permettra d'apprécier les autres avantages d'un procédé et d'un dispositif d'homogénéisation et de filtration selon l'invention, et s'appuie sur la figure 1 qui représente une vue schématique dudit dispositif et qui permet d'illustrer un mode de réalisation préférentiel.

Le dispositif illustré par la figure 1 comprend un corps d'extrudeuse 1 monté sur un châssis (non représenté). Une vis 2 comportant des filets 21 est entraînée en rotation par un ensemble moteur (non représenté). Un système d'alimentation (non représenté) placé en amont permet d'introduire le matériau viscoélastique dans le dispositif. La forme des filets 21, représentée ici de manière schématique, est adaptée selon les méthodes connues de l'homme du métier, au débit et à la température que l'on désire obtenir en sortie du dispositif.

Lorsque le dispositif est en fonctionnement, le flux de matériau circule dans le sens de la flèche F, à l'intérieur de l'espace balayé par les filets 21 de la vis 2, et situé entre la paroi intérieure du corps 1 de l'extrudeuse et le fond des filets de la vis 2. Cet espace est fermé en aval par une paroi 43 qui constitue le moyen permettant de forcer le flux de matériau à passer dans les orifices pratiqués dans les fonds de filet de la vis de diamètre supérieur. La paroi 43 est montée de manière à être rendue solidaire du corps 1.

Les fonds de filets 21 situés dans la partie aval de la vis 2 comportent des orifices 22, qui permettent de faire communiquer l'espace balayé par les filets de ladite vis avec un espace intérieur aménagé dans le noyau de la vis 2.

Il en résulte que le flux F est forcé, sous l'effet de la pression, de passer par les orifices 22 pour se diriger vers l'espace intérieur aménagé dans le noyau de la vis 2.

Cet espace intérieur comprend une seconde vis 3 dont l'axe de rotation est confondu avec l'axe de rotation de la vis de diamètre supérieur 2. Au niveau des orifices pratiqués dans la vis de diamètre supérieur, le diamètre de l'espace balayé par les filets 31 de la vis de diamètre inférieur 3 est inférieur au diamètre intérieur de l'espace aménagé dans le noyau de la vis de diamètre supérieur 2.

Le dispositif est complété par une tête 5, solidaire du corps 1, et située dans la partie aval du dispositif.

Un tube cylindrique fixe 4 est interposé entre l'espace balayé par les filets 31 de la vis de diamètre inférieur 3 et l'espace dans lequel débouchent les orifices 22. Ce tube cylindrique comporte des évidements 41 traversant la paroi du tube cylindrique, de telle sorte que le flux F est dirigé depuis les orifices 22 à travers les évidements 41 afin d'être repris par les filets 31 de la vis 3 de diamètre inférieur, qui mélangent le matériau de nouveau et le dirigent vers la sortie du dispositif.

Comme cela a déjà été dit plus haut, ces fragmentations multiples ont pour effet d'améliorer l'effet d'homogénéisation sans pour autant provoquer un échauffement important du matériau. Le parcours dit passif, pendant lequel le matériau est propulsé par le seul effet de la pression générée par la vis de grand diamètre, peut être extrêmement faible et se réduire à la seule épaisseur du tube cylindrique qui peut être comprise entre 1 et 10 mm.

On cherchera par ailleurs à minimiser l'épaisseur du tube cylindrique 4 pour faciliter le vidage du dispositif avant une phase d'arrêt, afin de réduire au maximum la quantité de matériau restant dans le dispositif.

Les évidements 41 pratiqués dans le tube cylindrique peuvent être de taille et de forme extrêmement variable selon que l'on souhaite réaliser une simple homogénéisation ou que l'on désire réaliser un filtrage du matériau.

Lorsque le dispositif est utilisé comme homogénéisateur la forme des évidements 41 est adaptée pour séparer le plus efficacement possible les flux de matériau traversant les filets 21 de la vis de diamètre supérieur. Une forme en fente semble procurer la meilleure efficacité, et l'angle de la fente avec la direction des génératrices du tube cylindrique doit être adapté à la vitesse de rotation des vis. La direction générale des fentes peut être alignée selon un angle compris entre 0° et 90 ° avec la direction des génératrices du tube cylindrique.

En réduisant la taille des évidements 41, le dispositif fait alors fonction de filtre. La taille des évidements, qui peuvent avantageusement prendre la forme de trous cylindriques, peut être réduite, si l'on prend soin par ailleurs d'augmenter le nombre desdits évidements 41 de manière à ne pas pénaliser le dispositif par une perte de charge trop élevée.

De manière à diminuer la perte de charge du filtre il est possible de donner aux parois des évidements 41 une forme évasée de telle sorte que la section de l'évidement augmente dans le sens de la progression du matériau à travers le filtre. Il est ainsi possible de retenir les matières indésirables en amont du filtre, tout en favorisant le passage du matériau dans l'évidement.

Cette perte de charge peut encore être réduite en augmentant le diamètre de la vis 2 de diamètre supérieur au niveau de la zone de transfert aval, comme cela est illustré sur la figure 1. Cette disposition permet d'augmenter la surface globale du filtre par rapport au débit du dispositif.

La paroi 43 est munie d'un conduit 42 qui se prolonge au niveau de la tête 5 par une sortie 52, laquelle comporte un organe d'évacuation 6, 62 fermé par un obturateur amovible 61.

Les particules ne pouvant pas passer au travers des évidements 41 du tube 4, sont réduites mécaniquement par le mouvement de la partie interne de la vis de diamètre supérieur 2 autour du tube cylindrique 4 jusqu'à ce que leur taille soit suffisante pour passer au travers d'un évidement 41. Si la particule ne peut pas être réduite, elle est alors repoussée vers l'extrémité du tube en direction de la paroi 43.

Il suffit alors d'enlever l'obturateur 61 pour vider l'espace où se sont accumulées ces impuretés par l'intermédiaire des conduits 42, 52, 62. On évite alors un bouchage des évidements 41 pratiqués dans le tube cylindrique 4, sans avoir besoin d'interrompre l'utilisation du dispositif pour changer ou nettoyer le filtre.

Pour faciliter le montage de l'ensemble des organes, la paroi 43 est rendue solidaire du tube cylindrique 4. De cette manière le montage et le démontage dudit tube cylindrique 4 peut s'opérer simplement en retirant la tête d'extrusion 5.

Un autre avantage du dispositif selon l'invention est de pouvoir faire tourner les vis à la même vitesse de rotation. En effet, les filets entraînent le matériau selon un mouvement de translation par rapport à une paroi fixe. Cet effet est obtenu par les filets 21 vis-à-vis de la paroi intérieure du corps 1, et de manière identique par les filets 31 vis-à-vis de la paroi intérieure du tube cylindrique 4.

Il est alors facile de rendre les vis solidaires les unes des autres en les disposant de manière concentrique et coaxiale les unes par rapport aux autres. Seule la vis de plus grand diamètre nécessite d'être reliée à un organe d'entraînement moteur, ce qui simplifie grandement la réalisation du dispositif.

On peut également réaliser un ensemble comprenant plusieurs étages successifs en prolongeant la tête 5 du corps 1, et en pratiquant des orifices dans la partie aval de la vis 3 permettant de faire communiquer l'espace balayé par les filets 31 de la vis 3 avec un espace intérieur aménagé dans le noyau de la vis 3 qui travaillerait en collaboration avec une vis de diamètre inférieur (non représentée sur la figure 1).

Cette cascade de vis collaborant successivement les unes avec les autres peut en outre être réalisée dans un encombrement très réduit en réalisant des vis concentriques.

Il est alors possible d'affecter aux différents tubes cylindriques des fonctions plus spécifiques en dédiant les tubes de diamètre élevé à des fonctions de filtration, et les tubes de diamètre inférieur à des fonctions d'homogénéisation ou encore des calibrer la taille des orifices pour filtrer des matières de taille de plus en plus réduite.

De même il est possible de faire varier le diamètre des différentes vis, ou encore de donner aux vis des formes coniques. On peut ainsi concevoir aisément que le diamètre de la vis 3 puisse augmenter à nouveau en aval de la partie du dispositif où cette vis collabore avec la vis 2.

## Revendications

1. Dispositif d'extrusion d'un matériau viscoélastique comportant deux (2, 3) ou plusieurs vis de malaxage et de transport disposées coaxialement et de manière concentriques dans un corps (1), dans lequel les fonds de filet d'une vis de diamètre supérieur (2) comportent des orifices (22) permettant de faire communiquer l'espace balayé par les filets (21) de ladite vis de diamètre supérieur (2) avec l'espace balayé par les filets (31) de la vis de diamètre immédiatement inférieur (3), dans lequel un tube cylindrique (4) fixe comprenant des évidements (41) traversant la paroi dudit tube cylindrique est interposé entre l'espace balayé par les filets (32) de la vis de diamètre inférieur (3) et l'espace dans lequel débouchent les orifices (22), dans lequel l'espace balayé par les filets de la vis de plus grand diamètre est fermé par une paroi (43) de sorte que, lorsque le dispositif est en fonctionnement, le matériau est forcé à passer dans les orifices (22) puis dans les évidements (41), **caractérisé en ce que** la paroi (43) comporte un orifice (42) communiquant avec un exutoire (52, 62) fermé par un moyen d'obturation amovible (61).

2. Dispositif selon la revendication 1, dans lequel la paroi (43) est solidaire du tube cylindrique (4).

3. Dispositif selon l'une des revendications 1 ou 2, dans lequel le tube cylindrique (4) est amovible.

4. Dispositif selon l'une des revendications 1 à 3, dans lequel les vis (2,3) sont rendues solidaires l'une de l'autre par l'intermédiaire de leurs noyaux respectifs.

5. Dispositif selon l'une des revendications 1 à 4, dans lequel les évidements (41) sont des trous cylindriques.

6. Dispositif selon l'une des revendications 1 à 4, dans lequel les évidements (41) sont des fentes faisant un angle donné avec les génératrices du tube cylindrique (4).

7. Dispositif selon l'une des revendications 5 ou 6 dans lequel les parois des évidements (41) ont une forme évasée de telle sorte que la section de l'évidement augmente dans' le sens de la progression du matériau à travers le tube cylindrique (4).

8. Procédé d'homogénéisation et de filtrage d'un matériau viscoélastique dans lequel on utilise un dispositif selon l'une des revendications 1 à 8 **caractérisé en ce qu'**on extrait du dispositif les matières dont la taille est supérieure à la taille des évidements (41) en ouvrant l'obturateur (61), sans interrompre le fonctionnement du dispositif.

9. Procédé d'homogénéisation et de filtrage selon la revendication 8, dans lequel on fait tourner les vis (2, 3) à la même vitesse.

## Claims

1. Device for extruding a viscoelastic material comprising two (2, 3) or several kneading and conveying screws positioned coaxially and concentrically in a body (1), in which the flight troughs of a larger-diameter screw (2) have orifices (22) allowing the space swept by the flights (21) of the said larger-diameter screw (2) to communicate with the space swept by the flights (31) of the immediately smaller-diameter screw (3), in which a fixed cylindrical tube (4) comprising apertures (41) passing through the wall of the said cylindrical tube is inserted between the space swept by the flights (32) of the smaller-diameter screw (3) and the space into which the orifices (22) open, in which the space swept by the flights of the larger-diameter screw is closed off by a wall (43) so that when the device is operating, the material is forced into the orifices (22) and then into the apertures (41), **characterized in that** the wall (43) has an orifice (42) communicating with an outfall (52, 62) closed off by a removable blanking means (B1).

2. Device according to Claim 1, in which the wall (43) is secured to the cylindrical tube (4).

3. Device according to one of Claims 1 and 2, in which the cylindrical tube (4) is removable.

4. Device according to one of Claims 1 to 3, in which the screws (2, 3) are secured to one another via their respective cores.

5. Device according to one of Claims 1 to 4, in which the apertures (41) are cylindrical holes.

6. Device according to one of Claims 1 to 4, in which the apertures (41) are slots forming a given angle with the generatrices of the cylindrical tube (4).

7. Device according to one of Claims 5 and 6, in which the walls of the apertures (41) have a flared shape so that the cross section of the aperture increases in the direction in which the material progresses through the cylindrical tube (4).

8. Method for homogenizing and filtering a viscoelastic material in which use is made of a device according to one of Claims 1 to 8, **characterized in that** substances larger in size than the apertures (41) are extracted from the device by opening the blanking element (61) without interrupting the operation of the device.

9. Homogenizing and filtering method according to Claim 8, in which the screws (2, 3) are turned at the same speed.

## Patentansprüche

1. Vorrichtung zum Extrudieren eines viskoelastischen Materials, umfassend zwei (2, 3) oder mehr Knet- und Förderschnecken, die koaxial und konzentrisch in einem Körper (1) angeordnet sind, wobei die Gewindegründe einer Schnecke (2) mit größerem Durchmesser Öffnungen (22) aufweisen, die es gestatten, den von den Gewindegängen (21) der Schnecke (2) mit größerem Durchmesser durchquerten Raum mit dem von den Gewindegängen (31) der Schnecke (3) mit unmittelbar kleinerem Durchmesser durchquerten Raum in Verbindung zu setzen, wobei ein zylindrisches, feststehendes Rohr (4), das Ausnehmungen (41) aufweist, die die Wand des zylindrischen Rohrs durchquerten, zwischen dem von den Gewindegängen (31) der Schnecke (3) mit kleinerem Durchmesser durchquerten Raum und dem Raum, in dem die Öffnungen (22) münden, angeordnet ist, wobei der von den Gewindegängen der Schnecke mit größerem Durchmesser durchquerte Raum durch eine Wand (43) geschlossen ist, so dass, wenn die Vorrichtung in Betrieb ist, das Material dazu gezwungen wird, in die Öffnungen (22) und dann in die Ausnehmungen (41) zu fließen, **dadurch gekennzeichnet, dass** die Wand (43) eine Öffnung (42) aufweist, die mit einem durch ein entfernbare Verschlussmittel (61) geschlossenen Auslass (52, 62) in Verbindung steht.

2. Vorrichtung nach Anspruch 1, wobei die Wand (43) fest mit dem zylindrischen Rohr (4) verbunden ist.

3. Vorrichtung nach Anspruch 1 oder 2, wobei das zylindrische Rohr (4) entfernbar ist.

4. Vorrichtung nach einem der Absprüche 1 bis 3, wobei die Schnecken (2, 3) durch ihre jeweiligen Kerne fest miteinander verbunden sind.

5. Vorrichtung nach einem der Ansprüche 1 bis 4, wobei die Ausnehmungen (41) zylindrische Löcher sind.

6. Vorrichtung nach einem der Ansprüche 1 bis 4, wobei die Ausnehmungen (41) Schlitze sind, die mit den Erzeugenden des zylindrischen Rohrs (4) einen gegebenen Winkel bilden.

7. vorrichtung nach Anspruch 5 oder 6, wobei die Wände der Ausnehmungen (41) eine aufgeweitete Form aufweise, so dass der Querschnitt der Ausnehmung in Materialflussrichtung durch das zylindrische Rohr (4) zunimmt.

8. Verfahren zum Homogenisieren und Filtrierten eines viskoelastischen Materials, bei dem eine Vorrichtung nach einem der Ansprüche 1 bis 7 verwendet wird, **dadurch gekennzeichnet, dass** die Materialien aus der Vorrichtung abgezogen werden, deren Größe größer ist als die Größe der Ausnehmungen (41), indem man den Verschluss (61) öffnet, ohne den Betrieb der Vorrichtung zu unterbrechen.

9. Verfahren zum Homogenisierten und Filtrierten nach Anspruch 8, wobei die Schnecken (2, 3) mit der gleichen Geschwindigkeit gedreht werden.
